# EUROPÄISCHE PATENTSCHRIFT

(11) **EP 1 281 833 B1**
(45) Veröffentlichungstag und Bekanntmachung des Hinweises auf die Patenterteilung: **05.10.2005**
(21) Anmeldenummer: 02017092.4
(22) Anmeldetag: 30.07.2002
(51) Int. Cl.: E06B 9/32, E06B 9/90

(54) **Positionsansteuerung von Jalousieantrieben**
Positioning control for blind operating system
Ajustement de position pour dispositifs d'entraînement de stores

(30) Priorität: 04.08.2001 DE 10138411
(43) Veröffentlichungstag der Anmeldung: 05.02.2003
(73) Patentinhaber: Theben AG, 72401 Haigerloch (DE)
(72) Erfinder: Schroth, Hagen, 72076 Tübingen (DE)
(74) Vertreter: Neymeyer, Franz

(56) Entgegenhaltungen:
- DE-A- 19 615 554
- DE-A- 19 919 200
- DE-U- 9 412 599
- DE-U- 9 421 948

## Beschreibung

Die Erfindung betrifft ein Verfahren zur Ermittlung und Berücksichtigung des Betriebsverhaltens eines Antriebes für Jalousien und dgl., welcher insbesondere als Asynchronmotor ausgebildet ist und über sogenannte Endlagenschalter in den beiden (oberen und unteren) Endlagen der Jalousie abgeschaltet wird, wobei zur Positionsansteuerung der Endlagen und vorgebbarer Zwischenpositionen eine, insbesondere über Tastschalter ansprechbare, programmierbare Steuereinheit vorgesehen ist, durch welche die End- und Zwischenpositionen zeitgesteuert durch Ansteuerung von Schaltrelais anfahrbar sind und wobei der Steuereinrichtung zum sicheren Erreichen der beiden Endlagen für jede Bewegungsrichtung zur theoretisch benötigten Gesamtlaufzeit eine Nachlaufzeit vorgebbar ist.

Jalousien, Markisen und dgl. werden beispielsweise in der Haustechnik zur Regulierung der Sonneneinstrahlung eingesetzt. Im einfachsten Fall werden Jalousien beispielsweise bei intensiver Sonneneinstrahlung aus einer vollständig geöffneten Endlage in eine vollständig geschlossene Endlage gefahren. Dadurch wird eine äußerst effektive Abdunklung des Raumes bewirkt, so daß ein unerwünschtes Aufheizen verhindert wird. Eine solche effektive Abdunklung ist jedoch bei geringerer Sonneneinstrahlung nicht notwendig und häufig auch nicht gewünscht, so daß die Jalousie nicht vollständig geschlossen sondern in unterschiedliche Zwischenpositionen gefahren wird. Um nun solche Zwischenpositionen definiert anfahren zu können, werden programmierbare Steuereinrichtungen eingesetzt, welchen unterschiedliche Zwischenpositionen vorgebbar sind, die beispielsweise durch Betätigen von programmierbaren Tastschaltern stets definiert angefahren werden können. Als Antrieb für solche Jalousien werden häufig Asynchronmotoren verwendet. Bekanntermaßen ist die Drehgeschwindigkeit solcher Antriebe lastabhängig, so daß die Fahrgeschwindigkeit bei der Abwärtsbewegung der Jalousie stets größer ist als bei der Aufwärtsbewegung. Dieser sogenannte Schlupf des Antriebes führt wiederum dazu, daß bei häufigem Verfahren der Jalousie zwischen den Zwischenpositionen um die gleichen Zeitwerte sich die Zwischenpositionen stets nach unten verschieben. Dies hat wiederum zur Folge, daß bei der Steuereinrichtung fest vorgegebenen Verfahrzeiten in Abhängigkeit von der Bewegungsrichtung unterschiedliche Wegstrecken der Jalousie zurückgelegt werden und sich die Jalousie mit zunehmender Betriebsdauer vollständig schließt.

Um nun unabhängig von der Bewegungsrichtung des Antriebes bzw. der Jalousie reproduzierbar vorbestimmte Zwischenpositionen anfahren zu können, sind unterschiedliche Steuereinrichtungen bekannt geworden, bei welchen der Schlupf des Antriebes Berücksichtigung findet. Dabei sind einerseits Systeme bekannt, bei welchen die Drehrichtung und Drehbewegung des Antriebes durch Sensoren erfaßt werden und andererseits solche, bei welchen die tatsächliche Position der Jalousie selbst durch Sensoren erfaßbar ist. Die Sensorsignale werden an eine Steuereinrichtung übermittelt, durch welche dann bei anliegendem Sensorsignal ein Abschalten des Antriebes in der jeweils gewünschten Sollposition erfolgt. D.h. daß bei diesen Steuereinrichtungen die Berücksichtigung der vorhandenen Toleranzen des Antriebes im wesentlichen durch eine Wegermittlung des Antriebes oder der Jalousie erfolgt. Weiterhin sind ebenfalls Steuereinrichtungen bekannt, bei welchen das Erkennen der Endlagen durch eine Überwachung des Spannungszustandes beider Ansteuerleitungen des Antriebes erfolgt. Dadurch soll erreicht werden, daß die Steuereinrichtung intern die Zeitberechnung an den Endlagen korrigieren kann. Eine Berücksichtigung des Schlupfes zum reproduzierbaren Anfahren von Zwischenstellungen ist hier allerdings nicht vorgesehen.

Als Sensoren für die exakte Lage- und Stellungsbestimmung des Antriebes bzw. der Jalousie werden dabei beispielsweise Lichtschrankenmodule verwendet, wie dies unter anderem aus der DE 94 12 599 U1 bekannt ist. In der DE 94 21 948 U1 sind desweiteren beispielhaft Antriebe für Rolläden, Rolltore, Jalousien und dgl. offenbart, welche mit einer Drehbewegungserfassung mittels Hallsensoren und mit einer Drehmomenterfassung ausgestattet sind, wobei als elektrische Schaltelemente Relais, Thyristoren oder Triacs dienen. Weiterhin ist aus DE 199 19 200 A bekannt, die ermittelte haufzeit des Tores als Stellgröße zu benutzen.

Zusammenfassend ist festzustellen, daß Antriebe mit über Sensoren zur Wegermittlung versehenen Steuereinrichtungen zwar ein äußerst präzises, reproduzierbares Anfahren von voreinstellbaren Zwischenpositionen ermöglichen, jedoch wesentlich teurer sind als herkömmliche Antriebe, insbesondere Asynchronantriebe.

Demzufolge liegt der Erfindung die Aufgabe zugrunde, ein Verfahren anzugeben, das es erlaubt, das Betriebsverhalten eines mit Schlupf behafteten Antriebes für Jalousien oder dgl. zu ermitteln und die ermittelten Werte einer Steuereinrichtung zur Verfügung zu stellen, so daß ohne aufwendige und teure Sensoren ein Anfahren von beliebigen Positionen des Antriebes bzw. der Jalousie reproduzierbar und unabhängig von der jeweiligen Bewegungsrichtung anfahrbar sind.

Die Aufgabe wird erfindungsgemäß durch folgende Verfahrensschritte gelöst:
- zum Ermitteln der Gesamtlaufzeit wird der Antrieb aus seiner oberen Endlage in seine untere Endlage gefahren und die dafür benötigte Gesamtlaufzeit gemessen,
- die gemessene Gesamtlaufzeit wird in die Steuereinheit eingegeben,
- der Antrieb wird in eine definierte Ausgangslage gefahren, welche insbesondere die obere Endlage oder eine unterhalb der oberen Endlage liegende erste Zwischenposition ist,
- in dieser Ausgangslage wird die Ausgangsposition der Jalousie sichtbar markiert,
- in die Steuereinheit wird zum Anfahren einer zweiten Zwischenposition ein vorbestimmter Laufzeitwert eingegeben und der Antrieb um diesen Wert aus der Ausgangslage in Abwärtsrichtung gefahren,
- die zweite Zwischenposition der Jalousie wird sichtbar markiert,
- der Antrieb wird um denselben, definierten Laufzeitwert wieder in Aufwärtsrichtung gefahren und danach die erreichte, dritte Zwischenposition sichtbar markiert,
- es wird der Abstand (A1) zwischen der Ausgangslage (ersten Zwischenposition) und der dritten Zwischenposition gemessen und ins Verhältnis gesetzt zum Abstand (A2) von der ersten und zweiten Zwischenposition oder zum Abstand (A3) von der zweiten und dritten Zwischenposition,
- das berechnete Verhältnis zwischen diesen Abständen (A1 und A2 bzw. A1 und A3) wird in die Steuereinrichtung eingegeben, welche daraus einen Laufzeitkorrekturfaktor für die Aufwärtsbewegung im Verhältnis zur Abwärtsbewegung errechnet.

Durch das erfindungsgemäße Verfahren ist eine Ansteuerung des Antriebes einer Jalousie oder dgl. in der Weise sicher durchführbar, daß die Jalousie in unterschiedliche, insbesondere fest vorgegebene Zwischenpositionen unabhängig von der Bewegungsrichtung der Jalousie fahrbar ist.

Dabei werden stets die gewünschten Zwischenpositionen der Jalousie sowohl bei der Abwärtsbewegung als auch bei der Aufwärtsbewegung sicher und reproduzierbar unter Berücksichtigung des jeweiligen Schlupfes des Antriebes erreicht. Dazu ist insbesondere vorgesehen, daß zunächst die Gesamtlaufzeit des Antriebes bzw. der Jalousie aus einer seiner bzw. ihrer Endlagen in seine bzw. ihre zweite Endlage empirisch durch einfache Zeitmessung ermittelt und in die Steuereinrichtung eingegeben wird. Diese Gesamtlaufzeit dient als Grundlage zur Berechnung von beispielsweise prozentual vorgebbaren Zwischenpositionen, die aus entsprechenden prozentualen Werten der Gesamtlaufzeit in Abwärtsrichtung der Steuereinrichtung eingebbar sind.

Zur Ermittlung des weiteren Betriebsverhaltens des Antriebes wird nun der Antrieb in eine definierte Ausgangslage gefahren. Diese Ausgangslage kann dabei die obere Endlage der Jalousie oder auch eine beliebige unterhalb der oberen Endlage liegende Zwischenposition sein. Es ist dabei sinnvoll, diese Zwischenposition in einem Bereich von bis zu 20% der abwärts gerichteten Gesamtlaufzeit zu wählen, was dementsprechend auch einem Stellweg von ebenfalls etwa 20% in Abwärtsrichtung entspricht. Diese Ausgangslage wird sichtbar markiert. Im nächsten Verfahrensschritt wird der Antrieb und damit die Jalousie um einen vorbestimmten Laufzeitwert weiter in Abwärtsrichtung gefahren, indem man der Steuereinrichtung einen entsprechenden Zeitwert vorgibt. Auch dieser Zeitwert kann als prozentualer Zeitwert der abwärts gerichteten Gesamtlaufzeit eingegeben werden, wobei der Prozentwert einen Absolutwert darstellen kann. Mit Absolutwert ist hier gemeint, daß bei einer Eingabe von z.B. 90% die Steuereinrichtung eine Zwischenposition der Jalousie anfährt, welche einer Gesamtlaufzeit von 90% aus der oberen Endlage entspricht. D.h. der Antrieb bzw. die Jalousie fährt bei Eingabe von 90% eine Position an, die einer Wegstrecke von 90% der Gesamtwegstrecke aus der oberen Endlage in die untere Endlage entspricht. Die Steuereinrichtung berechnet somit den vorbestimmten Laufzeitwert für die Abwärtsbewegung von einer 20%-igen Schließstellung in eine 90%-ige Schließstellung zu 70% der Gesamtlaufzeit der Abwärtsbewegung.

Nun wird auch diese zweite Zwischenposition der Jalousie sichtbar markiert.

Anschließend wird der Antrieb um denselben, definierten Laufzeitwert wieder in Aufwärtsrichtung gefahren und danach die erreichte, dritte Zwischenposition sichtbar markiert. Hier ist ebenfalls vorgesehen, daß der Steuereinrichtung wieder der 20%-ige Laufzeitwert der abwärts gerichteten Gesamtlaufzeit als Absolutwert eingegeben wird. Aus dem Laufzeitwert von 90% für die vorangegangene Abwärtsbewegung und dem neuerlich eingegebenen Laufzeitwert "auf" 20% errechnet sich die Steuereinrichtung einen Laufzeitwert für die Aufwärtsbewegung von ebenfalls 70% der Gesamtlaufzeit, welche demzufolge dem 70%-igen Laufzeitwert für die vorangegangene Abwärtsbewegung aus der Ausgangslage in die zweite Zwischenposition entspricht. D.h. der Antrieb fährt um die gleiche Laufzeit von 70% der Gesamtlaufzeit wieder in Aufwärtsrichtung. Auf Grund des vorhandenen Schlupfes erreicht der Antrieb bzw. die Jalousie eine dritte, kurz unterhalb der Ausgangslage (bzw. der ersten Zwischenposition) liegende dritte Zwischenposition, welche ebenfalls sichtbar markiert wird.

Im weiteren Fortgang des angegebenen Verfahrens wird nun der Abstand zwischen der Ausgangslage (bzw. der ersten Zwischenposition) und der dritten Zwischenposition sowie der Abstand zwischen der ersten und zweiten Zwischenposition gemessen. Diese Abstände werden zueinander ins Verhältnis gesetzt und das berechnete Verhältnis zwischen diesen Abständen wird in die Steuereinrichtung eingegeben. Anstatt des Abstandes zwischen der ersten und der zweiten Zwischenposition kann auch der Abstand zwischen der zweiten und dritten Zwischenposition zur Berechnung des Wegstreckenverhältnisses herangezogen werden. Aus dem der Steuereinrichtung eingegebenen Verhältnis errechnet diese einen Laufzeitkorrekturfaktor für die Aufwärtsbewegung im Verhältnis zur Abwärtsbewegung.

Ergibt die Ausmessung bei gleicher Laufzeit, beispielsweise bei einem Laufzeitwert von 70% der Gesamtlaufzeit in Abwärtsrichtung und anschließender Aufwärtsrichtung, eine in Aufwärtsrichtung um 0,7% kürzere Wegstrecke, so errechnet die Steuereinrichtung aus diesem Wert einen Laufzeitkorrekturfaktor. Dieser entspricht für das angegebene Beispiel einer Laufzeitverlängerung in Aufwärtsrichtung um eben diese 0,7% in Vergleich zur Laufzeit in Abwärtsrichtung. Im nachfolgenden Betriebszustand wird die prozentuale Laufzeitverlängerung stets bei jeder Aufwärtsbewegung berücksichtigt, so daß stets jede beliebige Zwischenposition sowohl in Abwärtsrichtung als auch in Aufwärtsrichtung reproduzierbar erreichbar ist, unabhängig davon, aus welcher Richtung und auch aus welcher anderen Zwischenposition diese Zwischenposition angefahren wird.

Die Verfahrensschritte gemäß Anspruch 2 ermöglichen eine ebenfalls äußerst einfache Ermittlung der tatsächlichen Gesamtlaufzeit in Abwärtsrichtung. Dazu wird zunächst die Nachlaufzeit für die Abwärtsbewegung auf Null gesetzt. Dadurch wird erreicht, daß der Antrieb mit der eingegebenen Gesamtlaufzeit aus seiner oberen Endlage in die untere Endlage fährt und in der unteren Endlage entweder nach Ablauf der eingegebenen Gesamtlaufzeit oder durch Betätigung der unteren Endlagenschalter stoppt. So wird anschließend der Antrieb aus seiner oberen Endlage in seine untere Endlage gefahren, wobei die Steuereinheit nach Ablauf der eingegebenen ersten Gesamtlaufzeit das den Antrieb in Bewegungsrichtung ansteuernde Schaltrelais abschaltet. Zur Überprüfung, ob die Abschaltung des Antriebes durch die Deaktivierung des Schaltrelais erfolgte oder durch die Betätigung des unteren Endlagenschalters, wird der Antrieb durch erneutes (manuelles) Aktivieren des Schaltrelais in Abwärtsrichtung eingeschaltet.

Nach dieser erneuten Aktivierung des Schaltrelais sind zwei Reaktionen des Antriebes möglich: zum einen kann es sein, daß sich der Antrieb nochmals kurz in Abwärtsrichtung bewegt und zum anderen kann es sein, daß der Antrieb keine Bewegungsreaktion zeigt. Aus dieser Bewegungsreaktion des Antriebes auf das erneute (manuelle) Aktivieren des Schaltrelais ist erkennbar, ob die ursprünglich eingegebene Gesamtlaufzeit zu kurz oder zu lang vorgegeben wurde.

Führt der Antrieb nach dieser Aktivierung erneut eine (kurze) Abwärtsbewegung bis zum Betätigen des unteren Endlagenschalters aus, so wird die erste der Steuerung vorgegebene Gesamtlaufzeit auf eine zweite längere Gesamtlaufzeit korrigiert.

Führt hingegen der Antrieb nach dieser Aktivierung keine erneute Abwärtsbewegung aus, so wird die erste der Steuereinrichtung vorgegebene Gesamtlaufzeit auf eine zweite, kürzere Gesamtlaufzeit korrigiert.

Mit der jeweils neu eingegebenen, korrigierten Gesamtlaufzeit wird der Vorgang wiederholt und evtl. erneut eine Korrektur der Gesamtlaufzeit vorgenommen, bis die präzise Gesamtlaufzeit eingestellt ist. Dies ist genau dann der Fall, wenn der Antrieb nach der erneuten Aktivierung gerade keine Bewegungsreaktion mehr zeigt. Somit läßt sich anhand der erfindungsgemäß angegebenen Verfahrensschritte gemäß Anspruch 2 die tatsächliche Gesamtlaufzeit des Antriebes von seiner oberen Endlage in seine untere Endlage präzise empirisch ermitteln.

In Anspruch 3 sind die erfindungsgemäßen Verfahrensschritte zur Ermittlung der präzisen Wendezeit der Lamellen einer Jalousie angegeben, welche diese benötigen, um von ihrer einen geschlossenen Winkellage in ihre zweite geschlossene Winkellage zu gelangen. Dazu wird der Antrieb aus einer beliebigen Ausgangslage nach oben oder nach unten gefahren. Zum Wenden der Lamellen wird der Antrieb anschließend in die entgegengesetzte Richtung gefahren und die Wendezeit der Lamellen gemessen, welche diese benötigen, um von ihrer einen Extremstellung in ihre zweite Extremstellung zu gelangen.

Diese gemessene Wendezeit wird in die Steuereinrichtung eingegeben und der Antrieb nun durch die Steuereinrichtung mit der eingegebenen Wendezeit erneut in die ursprüngliche Richtung gefahren, wobei die Lamellen während dieser Bewegung aus ihrer einen geschlossenen Winkellage in Richtung ihrer zweiten geschlossenen Winkellage wenden.

Zur Überprüfung, ob die Wendebewegung vollständig war, wird der Antrieb nach dem Abschalten nach der eingegebenen Wendezeit in dieselbe Bewegungsrichtung kurzzeitig aktiviert. Tritt nun eine weitere Wendebewegung der Lamellen auf, so wird die eingegebene Wendezeit in einen größeren Wert korrigiert, andernfalls wird die Wendezeit verringert. Durch Wiederholung der vorigen Schritte ist die korrekte Wendezeit der Lamellen empirisch ermittelbar. Bei diesen Verfahrensschritten zur empirischen Ermittlung der Wendezeit zum vollständigen Wenden der Lamellen wird die gemäß Anspruch 1 ermittelte Laufzeitkorrektur bereits berücksichtigt, so daß die Wendezeitkorrekturen sowohl für die Abwärtsbewegung als auch für die Aufwärtsbewegung eingegeben werden können und die Bewegungsreaktionen der Lamellen bei der erneuten Aktivierung des Antriebes nach der selbständigen Abschaltung stets in beiden Richtung identisch dieselben sind.

Gemäß Anspruch 4 wird für die Zeitberechnung der vorgebbaren Laufzeiten zum Erreichen der unterschiedlichen Positionen des Antriebes sowie der Winkellagen der Lamellen ein Steuerquarz verwendet, dessen Quarzfrequenz zur Umrechnung der Sollzeit auf eine bestimmte Anzahl von Frequenzimpulsen zugrundegelegt wird. Durch die Umrechnung der eingegebenen bzw. ermittelten oder gemessenen Sollzeiten in eine entsprechende Anzahl von Impulsen der Quarzfrequenz erfolgt die Abschaltung durch eine interne Impulszählung in der Steuereinrichtung. Auch ist die Steuereinrichtung dementsprechend mit einem nicht flüchtigen Speicher versehen, in welchem die eingegebenen und die zu den Berechnungen notwendigen Daten abgelegt bzw. ablegbar sind.

Gemäß Anspruch 5 kann neben dem Steuerquarz ein Meßeingang, wie z.B. ein A/D-Wandler, vorgesehen sein, durch welchen die aktuell vorliegende Netzfrequenz der Speisespannung des Antriebs in von der Steuereinrichtung zur Zeitberechnung verarbeitbare Frequenzimpulse umgewandelt wird. Da, wie zu Anspruch 4 bereits erwähnt, die Zeitberechnung durch die Steuereinrichtung durch Zählung von Frequenzimpulsen erfolgt, kann zum Erzeugen dieser zu zählenden Frequenzimpulse auch die Netzfrequenz herangezogen werden. Wird im Programmierbetrieb z.B. ein Steuerquarz mit einer Frequenz von 50 Hz verwendet, so können in einfacher Weise durch die Zugrundelegung der Netzfrequenz im Betriebszustand auch Netzfrequenzschwankungen in der Steuereinrichtung einfach berücksichtigt werden. Denn für eine zurückzulegende Wegstrecke der Jalousie von einer bestimmten Ausgangslage in eine andere, vorbestimmbare Zwischenposition oder einer beliebigen Zwischenposition in eine weitere Zwischenposition wird nur die Anzahl der vorher berechneten Frequenzimpulse gezählt und "abgefahren". Bei Erreichen der berechneten Anzahl von Impulsen schaltet die Steuereinrichtung folgerichtig den Antrieb ab. Ändert sich nun die Netzfrequenz, so bleibt die Anzahl der zu zählenden Impulse gleich, während sich die Laufzeit des Antriebes vergrößert, wenn dieser beispielsweise bei einer geringer werdenden Netzfrequenz langsamer läuft, wie dies z.B. bei Asynchronantrieben der Fall ist.

Somit ist zusammenfassend festzustellen, daß durch die erfindungsgemäße empirische Ermittlung des Betriebsverhaltens und dessen Verarbeitung in der Steuereinrichtung eines Antriebs für Jalousien oder dgl. ein solcher Antrieb ohne elektronische Sensoren betrieben werden kann und trotz einer solchen Minimierung an Ausstattung ein präzises Anfahren von unterschiedlichen, vorgebbaren Positionen der Jalousie sicher zu erreichen ist. Dabei steht im Vordergrund, den beispielsweise bei der Verwendung von Asynchronmotoren auftretenden Schlupf zu eliminieren, um identische Jalousiepositionen sowohl bei der Abwärtsbewegung als auch bei der Aufwärtsbewegung sicher erreichen zu können. Desweiteren ist auch sichergestellt, bestimmte, vorgebbare Stellwinkel der Jalousielamellen zu berücksichtigen, wobei diverse, ebenfalls vorwählbare Winkelstellungen dieser Lamellen identisch sowohl bei der Aufwärtsbewegung wie auch bei der Abwärtsbewegung erreicht werden.

Im normalen Betrieb nach der Programmierphase wird dem Antrieb sowohl für die vollständige Aufwärtsbewegung als auch für die vollständige Abwärtsbewegung eine Nachlaufzeit vorgegeben, durch welche sichergestellt wird, daß bei entsprechender Ansteuerung der Steuereinheit die untere bzw. die obere Endlage des Antriebes bzw. der Jalousie auch sicher erreicht wird. Für den Programmierbetrieb, insbesondere für die empirische Ermittlung der Gesamtlaufzeit wird, sofern die Gesamtlaufzeit für die Abwärtsbewegung der Zeitermittlung zugrundegelegt wird, die Nachlaufzeit für die Abwärtsbewegung auf Null gesetzt, so daß eine Abschaltung des Antriebes durch entsprechende Ansteuerung des Schaltrelais nach Ablauf der Gesamtlaufzeit und vor Betätigung des unteren Endlagenschalters für die Abwärtsbewegung auch sicher erkennbar ist.

Durch das empirische Ermitteln des Schlupfes, der Gesamtlaufzeit sowie der Wendezeiten wird erreicht, daß das präzise Anfahren von Zwischenpositionen einer Jalousie und auch die präzise Einstellung der Winkelstellung der Lamellen in bestimmten, vorgebbaren Schließpositionen der Lamellen sowohl bei der Aufwärtsbewegung als auch bei der Abwärtsbewegung jede gewünschte, vorwählbare Schließposition in einfachster Weise, reproduzierbar erreichbar ist. Es sind dazu keinerlei Sensoren notwendig, durch welche die Winkelposition des Antriebes oder auch die tatsächliche vertikale Lage der Jalousie ermittelt werden müßte.

## Patentansprüche

1. Verfahren zur Ermittlung und Berücksichtigung des Betriebsverhaltens eines Antriebes für Jalousien und dgl., welcher insbesondere als Asynchronmotor ausgebildet ist und über sogenannte Endlagenschalter in den beiden (oberen und unteren) Endlagen der Jalousie abgeschaltet wird, wobei zur Positionsansteuerung der Endlagen und vorgebbarer Zwischenpositionen eine, insbesondere über Tastschalter ansprechbare, programmierbare Steuereinheit vorgesehen ist, durch welche die End- und Zwischenpositionen zeitgesteuert durch Ansteuerung von Schaltrelais anfahrbar sind und wobei der Steuereinrichtung zum sicheren Erreichen der beiden Endlagen für jede Bewegungsrichtung zur theoretisch benötigten Gesamtlaufzeit eine Nachlaufzeit vorgebbar ist,
**gekennzeichnet durch** folgende Verfahrensschritte,
- zum Ermitteln der Gesamtlaufzeit wird der Antrieb aus seiner oberen Endlage in seine untere Endlage gefahren und die dafür benötigte Gesamtlaufzeit gemessen,
- die gemessene Gesamtlaufzeit wird in die Steuereinheit eingegeben,
- der Antrieb wird in eine definierte Ausgangslage gefahren, welche insbesondere die obere Endlage oder eine unterhalb der oberen Endlage liegende erste Zwischenposition ist,
- in dieser Ausgangslage wird die Ausgangsposition der Jalousie sichtbar markiert,
- in die Steuereinheit wird zum Anfahren einer zweiten Zwischenposition ein vorbestimmter Laufzeitwert eingegeben und der Antrieb um diesen Wert aus der Ausgangslage in Abwärtsrichtung gefahren,
- die zweite Zwischenposition der Jalousie wird sichtbar markiert,
- der Antrieb wird um denselben, definierten Laufzeitwert wieder in Aufwärtsrichtung gefahren und danach die erreichte, dritte Zwischenposition sichtbar markiert,
- es wird der Abstand (A1) zwischen der Ausgangslage bzw. der ersten Zwischenposition und der dritten Zwischenposition gemessen und ins Verhältnis gesetzt zum Abstand (A2) von der Ausgangslage bzw. der ersten und der zweiten Zwischenposition oder zum Abstand (A3) von der zweiten und dritten Zwischenposition,
- das berechnete Verhältnis zwischen diesen Abständen (A1 und A2 bzw. A1 und A3) wird in die Steuereinrichtung eingegeben, welche daraus einen Laufzeitkorrekturfaktor für die Aufwärtsbewegung im Verhältnis zur Abwärtsbewegung errechnet.

2. Verfahren nach Anspruch 1, **dadurch gekennzeichnet, daß** die präzise Bestimmung der maximalen Gesamtlaufzeit in Abwärtsrichtung durch folgende Schritte erfolgt:
- die Nachlaufzeit für die Abwärtsbewegung wird auf Null gesetzt,
- der Antrieb wird aus seiner oberen Endlage in seine untere Endlage gefahren, wobei die Steuereinheit nach Ablauf der eingegebenen ersten Gesamtlaufzeit das den Antrieb in Bewegungsrichtung ansteuernde Schaltrelais abschaltet,
- der Antrieb wird durch erneutes (manuelles) Aktivieren des Schaltrelais in Abwärtsrichtung eingeschaltet,
- führt der Antrieb nach dieser Aktivierung erneut eine (kurze) Abwärtsbewegung bis zum Betätigen des unteren Endlagenschalters aus, so wird die erste der Steuerung vorgegebene Gesamtlaufzeit auf eine zweite längere Gesamtlaufzeit korrigiert;
- führt der Antrieb nach dieser Aktivierung keine erneute Abwärtsbewegung aus, so wird die erste der Steuereinrichtung vorgegebene Gesamtlaufzeit auf eine zweite, kürzere Gesamtlaufzeit korrigiert,
- mit der neu eingegebenen korrigierten Gesamtlaufzeit wird der Vorgang wiederholt und evtl. erneut eine Korrektur der Gesamtlaufzeit vorgenommen, bis die präzise Gesamtlaufzeit eingestellt ist.

3. Verfahren nach Anspruch 1 oder 2, **dadurch gekennzeichnet, daß** die Ermittlung der Wendezeit der Lamellen der Jalousie aus ihrer einen geschlossenen Winkellage in ihre zweite geschlossene Winkellage wie folgt durchgeführt wird:
- der Antrieb wird aus einer beliebigen Ausgangslage nach oben oder nach unten gefahren,
- der Antrieb wird zum Wenden der Lamellen in die entgegengesetzte Richtung gefahren und die dabei benötigte Wendezeit der Lamellen gemessen,
- die gemessene Wendezeit wird in die Steuereinrichtung eingegeben,
- der Antrieb wird nun durch die Steuereinrichtung mit der eingegebenen Wendezeit erneut in die ursprüngliche Richtung gefahren, wobei die Lamellen während dieser Bewegung aus ihrer einen geschlossenen Winkellage in Richtung ihrer zweiten geschlossenen Winkellage wenden,
- der Antrieb wird nach dem Abschalten nach der eingegebenen Wendezeit in dieselbe Bewegungsrichtung kurzzeitig aktiviert,
- tritt nun eine weitere Wendebewegung der Lamellen auf, so wird die eingegebene Wendezeit in einen größeren Wert korrigiert, andernfalls wird die Wendezeit verringert,
- durch Wiederholung der vorigen Schritte ist die korrekte Wendezeit der Lamellen ermittelbar.

4. Verfahren nach einem der Ansprüche 1 bis 3, **dadurch gekennzeichnet, daß** für die Zeitberechnung der vorgebbaren Laufzeiten zum Erreichen der unterschiedlichen Positionen des Antriebes ein Steuerquarz verwendet wird, dessen Quarzfrequenz zur Umrechnung der Sollzeit auf eine bestimmte Anzahl von Frequenzimpulsen zugrundegelegt wird, und
daß die eingegebene bzw. ermittelte oder gemessene Sollzeit in eine entsprechende Anzahl von Impulsen der Quarzfrequenz umgerechnet wird.

5. Verfahren nach Anspruch 4, **dadurch gekennzeichnet, daß** neben dem Steuerquarz ein Meßeingang, z.B. in Form eines A/D-Wandlers, vorgesehen ist, durch welchen die aktuell vorliegende Netzfrequenz der Speisespannung des Antriebs in von der Steuereinrichtung zur Zeitberechnung verarbeitbare Frequenzimpulse umgewandelt wird.

## Claims

1. A method for determining and taking into consideration the operating behaviour of a drive for blinds and the like, which is constructed in particular as an induction motor and is switched off by so-called limit switches in the two (upper and lower) ends of travel of the blind, where a programmable control unit that can be operated in particular by pushbutton switches is provided to control the position of the ends of travel and preset intermediate positions, by which control unit the final and intermediate positions can be approached in time-controlled manner by switch relays and where a tracking time can be preset for the control device for safely reaching the two ends of travel for each movement direction for the theoretically required total running time,
**characterised by** the following method steps,
- to determine the total running time the drive is moved out of its upper end of travel into its lower end of travel and the total running time required for this is measured,
- the total running time is inputted into the control unit,
- the drive is moved into a defined initial position which in particular is the upper end of travel or a first intermediate position lying beneath the upper end of travel,
- in this initial position the initial position of the blind is visibly marked,
- a predetermined running time value is inputted into the control unit for approaching a second intermediate position and the drive is moved out of the initial position in the downward direction by this value,
- the second intermediate position of the blind is visibly marked,
- the drive is moved again in the upward direction by the same, defined running time value and then the third intermediate position that is reached is visibly marked,
- the distance (A1) between the initial position or the first intermediate position and the third intermediate position is measured and expressed in relationship to the distance (A2) from the initial position or the first and the second intermediate position or to the distance (A3) from the second and third intermediate position,
- the calculated relationship between these distances (A1 and A2 and A1 and A3) is inputted into the control device, which calculates therefrom a running time correction factor for the upward movement in relationship to the downward movement.

2. A method according to Claim 1,
**characterised in that** the precise determination of the maximum running time in the downward direction is performed by the following steps:
- the tracking time for the downward movement is set at zero,
- the drive is moved out of its upper end of travel into its lower end of travel, with the control unit switching off the switch relay controlling the drive in the direction of movement after the inputted first total running time has expired,
- the drive is switched on by renewed (manual) activation of the switch relay in the downward direction,
- if, after this activation, the drive again performs a (short) downward movement until the activation of the lower limit switch, the first total running time preset for the control unit is corrected to a second longer total running time;
- if, after this activation, the drive does not perform a renewed downward movement, the first total running time preset for the control device is corrected to a second, shorter total running time,
- the operation is repeated with the newly inputted, corrected total running time and possibly a correction of the total running time is performed again until the precise total running time is set.

3. A method according to Claim 1 or 2,
**characterised in that** the determination of the turning time of the slats of the blind from their one closed angular position into their second closed angular position is performed as follows:
- the drive is moved upwards or downwards out of any initial position,
- the drive is moved in the opposite direction to turn the slats and the turning time required for this is measured,
- the measured turning time is inputted into the control device,
- the drive is now moved by the control device with the inputted turning time again in the original direction, with the slats turning during this movement from their one closed angular position in the direction of their second closed angular position,
- after switching off the drive is temporarily activated according to the inputted turning time in the same movement direction,
- if another turning movement of the slats occurs, the inputted turning time is corrected into a larger value, otherwise the turning time is reduced,
- the correct turning time of the slats can be determined by repeating the above steps.

4. A method according to one of Claims 1 to 3,
**characterised in that** a quartz oscillator is used to calculate the time of the preset running times for reaching the different positions of the drive, the quartz frequency of said quartz oscillator being used to convert the set time into a determined number of frequency pulses,
and **in that** the inputted and determined or measured set time is converted into a corresponding number of pulses of the quartz frequency.

5. A method according to Claim 4,
**characterised in that** a measurement input is provided next to the quartz oscillator, e.g. in the form of an A/D converter, by which the currently available power frequency of the feed voltage of the drive is converted into frequency pulses that can be processed by the control device to calculate the time.

## Revendications

1. Procédé de détermination et de prise en compte du comportement en service d'un entraînement pour stores et similaires, lequel est conçu notamment comme un moteur asynchrone et est mis hors service par ce qu'on appelle des interrupteurs de bout de course dans les deux états extrêmes (supérieur et inférieur) du store, une unité de commande programmable, pouvant être notamment déclenchée par des poussoirs, étant prévue pour commander la position des états extrêmes et des positions intermédiaires pouvant être prédéfinies, unité de commande par laquelle les positions finales et intermédiaires peuvent être mises en marche de façon synchronisée par la commande d'un relais tout-ou-rien et un temps de retard pouvant être alloué au système de commande pour atteindre de façon assurée les deux états extrêmes pour chaque sens de déplacement par rapport au temps de fonctionnement total théoriquement nécessaire,
**caractérisé par** les étapes de procédé suivantes,
- pour déterminer le temps de fonctionnement total, l'entraînement est déplacé de son état extrême supérieur à son état extrême inférieur et le temps de fonctionnement total nécessaire pour cela est mesuré,
- le temps de fonctionnement total mesuré est introduit dans l'unité de commande,
- l'entraînement est déplacé dans un état de départ défini, lequel est notamment l'état extrême supérieur ou une première position intermédiaire située au-dessous de l'état extrême supérieur,
- dans cet état extrême, la position de départ du store est marquée de manière visible,
- pour lancer une seconde position intermédiaire, une valeur de temps de fonctionnement prédéfinie est introduite dans l'unité de commande et l'entraînement est déplacé de cette valeur vers le bas à partir de l'état de départ,
- la seconde position intermédiaire du store est marquée de manière visible,
- l'entraînement est à nouveau déplacé vers le haut par la même valeur de temps de fonctionnement définie et ensuite la troisième position intermédiaire atteinte est marquée de manière visible,
- la distance (A1) entre l'état de départ ou de la première position intermédiaire et la troisième position intermédiaire est mesurée et comparée à la distance (A2) entre l'état de départ ou de la première et de la deuxième positions intermédiaires ou à la distance (A3) entre la deuxième et la troisième positions intermédiaires,
- le rapport calculé entre ces distances (A1 et A2 ou A1 et A3) est introduit dans le système de commande, lequel en calcule un facteur de correction de temps de fonctionnement pour le déplacement ascendant par rapport au déplacement descendant.

2. Procédé selon la revendication 1, **caractérisé en ce que** la détermination précise du temps de fonctionnement total maximal vers le bas s'effectue par les étapes suivantes :
- le temps de retard pour le déplacement descendant est mis à zéro,
- l'entraînement est déplacé de son état extrême supérieur à son état extrême inférieur, l'unité de commande, après que se soit écoulé le premier temps de fonctionnement total introduit, mettant hors service le relais tout-ou-rien commandant l'entraînement dans le sens de déplacement,
- l'entraînement est mis en service en descente en activant à nouveau (manuellement) le relais tout-ou-rien,
- si l'entraînement réalise à nouveau après cette activation une (courte) descente, jusqu'à l'actionnement de l'interrupteur de fin de course inférieur, le premier temps de fonctionnement total alloué à la commande est corrigé pour obtenir un second temps de fonctionnement total plus long ;
- si l'entraînement, après cette activation, ne réalise aucun nouveau déplacement descendant, le premier temps de fonctionnement total alloué au système de commande est corrigé pour obtenir un second temps de fonctionnement total plus court,
- le processus est répété avec le temps de fonctionnement total corrigé et réintroduit et une correction du temps de fonctionnement total est éventuellement à nouveau réalisée, jusqu'à ce que le temps de fonctionnement total précis soit réglé.

3. Procédé selon la revendication 1 ou 2, **caractérisé en ce que** la détermination du temps de retournement des lamelles du store de son état angulaire fermé à son second état angulaire fermé est réalisée de la façon suivante :
- l'entraînement est déplacé d'un état de départ quelconque vers le haut ou vers le bas,
- l'entraînement est déplacé dans le sens de rotation opposé pour retourner les lamelles et le temps de retournement des lamelles dans ce cas nécessaire est mesuré,
- le temps de retournement mesuré est introduit dans le système de commande,
- l'entraînement est à présent redéplacé dans le sens initial par le système de commande avec le temps de retournement introduit, les lamelles se retournant pendant ce déplacement depuis un de leurs états angulaires fermés en direction de leur second état angulaire fermé,
- l'entraînement est temporairement activé dans ce même sens de déplacement dès la mise hors service selon le temps de retournement introduit,
- si un autre déplacement de retournement des lamelles se produit à présent, le temps de retournement introduit est corrigé pour atteindre une valeur plus importante, sinon le temps de retournement est réduit,
- en répétant les étapes précédentes, il est possible de déterminer le temps de retournement correct des lamelles.

4. Procédé selon l'une quelconque des revendications 1 à 3, **caractérisé en ce que**, pour calculer les temps de fonctionnement pouvant être alloués nécessaires pour atteindre les différentes positions de l'entraînement, on utilise un quartz stabilisateur de fréquence, sur la fréquence de quartz duquel on se fonde pour convertir le temps théorique en un certain nombre d'impulsions de fréquence, et
**en ce que** le temps théorique introduit ou déterminé, ou mesuré, est converti en un nombre correspondant d'impulsions de la fréquence de quartz.

5. Procédé selon la revendication 4, **caractérisé en ce qu'**en plus du quartz stabilisateur de fréquence, un dispositif de mesure, par exemple sous forme d'un convertisseur analogique/numérique, est prévu, par lequel la fréquence de réseau actuellement présente de la tension d'alimentation de l'entraînement est convertie en impulsions de fréquence pouvant être traitées par le système de commande pour le calcul du temps.
